# EUROPEAN PATENT SPECIFICATION

(11) **EP 0 538 881 B1**
(45) Date of publication and mention of the grant of the patent: **02.04.1997**
(21) Application number: 92118186.3
(22) Date of filing: 23.10.1992
(51) Int. Cl.: C08G 65/32, C08K 5/09, C08K 5/17

(54) **Curable resin composition**
Härtbare Harzzusammensetzung
Composition de résine durcissable

(30) Priority: 24.10.1991 JP 277982/91
(43) Date of publication of application: 28.04.1993
(73) Proprietor: Kanegafuchi Chemical Industry Co., Ltd., Kita-ku Osaka-shi Osaka-fu (JP)
(72) Inventor: Suzuki, Mikiko, Takasago-shi, Hyogo-ken (JP); Wakabayashi, Hiroshi, Kobe-shi, Hyogo-ken (JP)
(74) Representative: Hansen, Bernd, Dr. Dipl.-Chem.

(56) References cited:
- EP-A- 0 035 049
- EP-A- 0 108 946
- EP-A- 0 339 666
- DE-A- 2 927 807
- PATENT ABSTRACTS OF JAPAN vol. 13, no. 451 (C-643)(3799) 11 October 1989 & JP-A-11 74 560

## Description

### BACKGROUND OF THE INVENTION

### Field of the Invention

The present invention relates to a curable resin composition having a high curing rate and less toxicity.

### Description of the Related Art

Hitherto, various compounds are known to be useful for curing a polymer which having at least one silicon atom-containing group to the silicon atom of which a hydroxyl group or a hydrolyzable group is attached and being cross-linked through formation of a siloxane bond. Among such compounds, organometallic compounds such as dibutyltin dilaurate, tin octylate and lead octylate are used for increasing the curing rate, see e.g. DE-A-2 927 807.

However, the organometallic compounds containing tin or lead are not only expensive but also highly toxic.

To avoid such drawbacks of the organometallic compounds, it is contemplated to use a carboxylic acid in place of the organometallic compounds. When the carboxylic acid is used, a curing rate of the polymer is considerably decreased in comparison with the organometallic compounds and the use of carboxylic acid is not practically attractive.

Besides the carboxylic acid, an amine or its derivative may be used. But, the amine or its derivative is not practically used because it has the same defects as the carboxylic acid and toxicity.

Carboxylic acids and amines are mentioned as curing accelerators for oxyalkylene polymers which have silicon-containing groups in EP-A-0 108 946 and EP-A-0 339 666.

### SUMMARY OF THE INVENTION

One object of the present invention is to provide a curable resin composition having a high curing rate and less toxicity.

Another object of the present invention is to provide a curable resin composition, a cured material of which has improved durability, physical properties and rubbery properties.

According to the present invention, there is provided a curable resin composition free from any organometallic component comprising:
(A) an oxyalkylene base polymer having at least one silicon atom-containing group whose silicon atom is attached to a hydroxyl group or a hydrolyzable group and being cross-linkable through formation of a siloxane bond;
(B) a compound having at least one carboxyl group; and
(C) a compound having at least one primary amine group.

### DETAILED DESCRIPTION OF THE INVENTION

As the oxyalkylene base polymer (A), a polymer comprising repeating units of the formula:

-R-O-

wherein R is a divalent organic group is preferred. As the R group, a hydrocarbon group having 3 to 4 carbon atom is preferred. Specific examples of the R group are 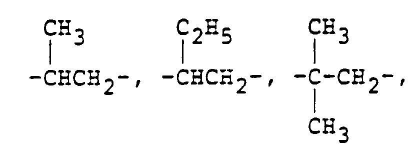 -CH₂CH₂CH₂CH₂-.
Among them, -CH(CH₃)-CH₂- is preferred.

The oxyalkylene base polymer (A) may have one kind of the repeating unit, though it may have two or more kinds of the repeating units.

The silicon-containing reactive group is a well known functional group and contributes to cross-linking even at room temperature. A kind of the silicon-containing reactive group is not limited in the present invention. Typical example of the silicon-containing reactive group is a group of the formula: 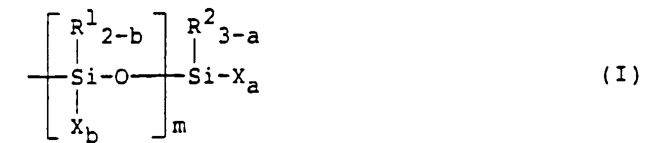 wherein R¹ and R² are the same or different and each an alkyl group having 1 to 20 carbon atoms, an aryl group having 6 to 20 carbon atoms, an aralkyl group having 7 to 20 carbon atoms or a triorganosiloxy group of the formula:

(R')₃SiO- (II)

in which R' is a monovalent hydrocarbon group having 1 to 20 carbon atoms provided that three R' groups may be the same or different; X is a hydroxyl group or a hydrolyzable group provided that when two or more X groups are present, they may be the same or different; a is 0, 1, 2 or 3; b is 0, 1 or 2 provided that b in different groups in the brackets may be the same or different; m is an integer of 0 to 19 provided that a sum of a and all b's is at least one.

The hydrolyzable group X is not limited and may be any of known hydrolyzable groups. Specific examples of the hydrolyzable group are hydrogen atom, a halogen atom, an alkoxy group, an acyloxy group, a ketoximate group, an amino group, an amido group, an acid amido group, an aminoxy group, a mercapto group and an alkenyloxy group. Among them, a hydrogen atom, an alkoxy group, an acyloxy group, a ketoximate group, an amino group, an amido group, a aminoxy group, a mercapto group and an alkenyloxy group are preferred. In view of mild hydrolysis and easy handling, an alkoxy group is particularly preferred.

To one silicon atom, one, two or three hydrolyzable groups or hydroxyl groups can be attached, and the sum of a and all b's is preferably from 1 to 5. When two or more hydrolyzable groups or hydroxyl groups are attached to the same silicon atom, they may be the same or different.

The silicon-containing reactive group may contain one or more silicon atoms. In a case of the silicon-containing reactive group in which the silicon atoms are bonded though siloxane linkages, the number of the silicon atoms is up to 20.

In view of easy availability, a silicon-containing reactive group of the formula: 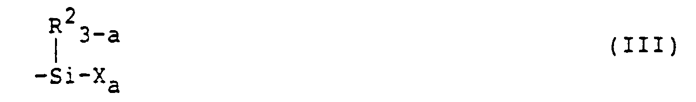 wherein R², X and a are the same as defined above is preferred.

Specific examples of R¹ and R² in the formula (I) are an alkyl group (e.g. a methyl group, an ethyl group), a cycloalkyl group (e.g. a cyclohexyl group), an aryl group (e.g. a phenyl group), an aralkyl group (e.g. a benzyl group), a triorganosiloxy group of the formula (II) in which R' is a methyl group or a phenyl group. As R², a methyl group is particularly preferred.

Preferably, one molecule of the polymer (A) contains at least one silicon-containing reactive group, more preferably 1.1 to 5 silicon-containing reactive groups on the average.

When the number of the silicon-containing reactive group is less than one, the curability of the composition is insufficient.

The silicon-containing reactive group may be present at an end of the polymer chain or on the polymer chain or both. In particular, when the silicon-containing reactive group is present at the chain end of the polymer, the final cured material has a large effective network chain amount so that a rubbery cured material having a large elongation is easily obtained.

The silicon-containing reactive group is introduced in the polymer by any of conventional methods. For example, with a polymer having a functional group such as a hydroxyl group at a chain end, an organic compound having an unsaturated group and an active group which is reactive with the functional group of the polymer is reacted and then a product is reacted with a hydrosilane having a hydrolyzable group to effect hydrosilylation of the polymer.

Typically, the hydrosilane is represented by the formula: 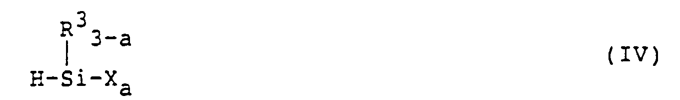 wherein R³ is a C₁-C₂₀ alkyl group, a C₆-C₂₀ aryl group or a C₇-C₂₀ aralkyl group provided that when two or three R³ groups are present, they may be the same or different, X is a hydroxyl group or a hydrolyzable group provided that when two or more X groups are present, they may be the same or different, and a is 1, 2 or 3.

The above hydrosilylation may be carried out in the presence of a catalyst. Examples of the hydrosilylation catalyst are H₂PtCl₆.6H₂O, metal platinum, RhCl(PPh₃)₃, RhCl₃, Rh on Al₂O₃, RuCl₃, IrCl₃, FeCl₃, AlCl₃, PdCl₂.2H₂O, NiCl₂, and TiCl₄.

The hydrosilylation is carried out at a temperature of 0 to 150°C. Optionally, a solvent such as benzene, toluene, xylene and tetrahydrofuran may be used to control the reaction temperature or a viscosity of the reaction mixture.

The prepared polymer (A) before being cured has a number average molecular weight of 500 to 100,000, preferably 1000 to 30,000.

A kind of the compound having at least one carboxyl group (hereinafter referred to as "carboxyl group-containing compound") is not limited and any of known compounds may be used. Specific examples of the carboxyl group-containing compound are as follows:
(1) Aliphatic monocarboxylic acids
   (a) Saturated monocarboxylic acids such as formic acid, acetic acid, acetoacetic acid, ethylmethylacetic acid, propionic acid, butyric acid, isobutyric acid, 2-ethylbutyric acid, ethoxyacetic acid, valeric acid, isovaleric acid, hexanoic acid, 2-ethylhexanoic acid, octanoic acid, decanoic acid, undecanoic acid, glyoxylic acid, glycolic acid, gluconic acid.
   (b) Olefinic monocarboxylic acids such as acrylic acid, methacrylic acid, angelic acid, crotonic acid, isocrotonic acid, 10-undecenic acid, elaidic acid, erucic acid, oleic acid.
   (c) Acetylenic monocarboxylic acids such as propiolic acid.
   (d) Diolefinic carboxylic acids such as linoleic acid, linoelaidic acid.
   (e) Highly unsaturated monocarboxylic acids such as linolenic acid, arachidonic acid.
   (f) Halogenated monocarboxylic acids such as chloroacetic acid, 2-chloroacrylic acid, chlorobenzoic acid.
(2) Aliphatic dicarboxylic acids
   (a) Saturated dicarboxylic acids such as adipic acid, azelaic acid, ethylmalonic acid, glutaric acid, oxalic acid, malonic acid, succinic acid, hydroxydiacetic acid.
   (b) Unsaturated dicarboxylic acids such as maleic acid, fumaric acid, acetylenedicaroxylic acid, itaconic acid.
(3) Aliphatic polycarboxylic acids
   Tricarboxylic acids such as aconic acid, citric acid, isocitric acid.
(4) Aromatic carboxylic acids
   (a) Aromatic monocarboxylic acids such as benzoic acid, 9-anthracenecarboxylic acid, atrolactinic acid, anisic acid, isopropylbenzoic acid, salicylic acid, toluic acid.
   (b) Aromatic polycarboxylic acids such as phthalic acid, isophthalic acid, terephthalic acid, carboxyphenylacetic acid, pyromellitic acid.
(5) Others
   Amino acids such as alanine leucine, threonine, aspartic acid, glutamic acid, arginine, cysteine, methionine, phenylalanine, tryptophane, histidine·
   Insofar as at least one carboxyl group is present in one molecule, any compound can be used according to the present invention. These compounds may be used independently or as a mixture of two or more of them.
   Among the above exemplified carboxylic group-containing compounds, the aliphatic monocarboxylic acids, in particular, those having 2 to 30 carbon atoms are preferred.
   The curable resin composition of the present invention further contains the primary amine compound. When a secondary or tertiary amine compound alone is used, the composition has a low curing rate.

Examples of the primary amines are as follows:
(a) Aliphatic primary amines
   propylamine, isopropylamine, isopropanolamine, butylamine, 1-ethylbutylamine, isobutylamine, pentylamine, octylamine, laurylamine, monoethanolamine, diethylaminopropylamine, oleylamine, cyclohexylamine, benzylamine, guanidine, 2-ethylhexylamine, triethylenetetramine, γ-aminoproyltrimethoxysilane, N-(β-aminoethyl)aminopropylmethyldimethoxysilane.
(b) Aromatic primary amines
   aniline, benzylaniline, nitroaniline, phenylenediamine, toluidine, toluylamine, xylenediamine, 2,3-xylidine, anisidine, phenetidine, benzidine, benzylamine, naphthylamine.

Among these primary amines, aliphatic monoamines having at least 5 carbon atoms, in particular at least 8 carbon atoms are preferred in view of physical properties such as water resistance of the cured material of the composition.

In combination with the primary amine, a secondary or tertiary amine may be used.

Examples of the secondary and tertiary amines are as follows:
(a) Aliphatic secondary amines
   diethylamine, diethanolamine, diethylenetriamine, dibutylamine, piperidine, diisopentylamine, pyrrolidine, morpholine, 2-ethyl-4-methylimidazole.
(b) Aromatic secondary amines
   N-ethylnaphthylamine, diphenylguanidine.
(c) Aliphatic tertiary amines
   triethylamine, triethanolamine, tripropylamine, tributylamine, 1,4-diazabicyclo[2.2.2]octane (DABCO), 1,8-diazabicyclo[5.4.0]undecene-7 (DBU).
(d) Aromatic tertiary amines
   N,N-dimethylaniline, N,N-dibenzylaniline, dimethylaminobenzoic acid, 2,4,6-tris(dimethylaminomethyl)phenol.

The total amount of the carboxyl group-containing compound and the primary amine is from 0.01 to 20 parts by weight, preferably from 0.1 to 10 parts by weight per 100 parts by weight of the oxyalkylene base polymer (A). When the total amount is less than 0.01 parts by weight, the curing rate of the composition tends to decrease and the composition may not be sufficiently cured. As the total amount increases over 20 parts by weight, the effect is not increased while a cost increases. In addition, the composition may be colored or the cured material may have deteriorated water resistance.

There is no limitation on a sequence of mixing the oxyalkylene base polymer (A), the carboxyl group-containing compound and the primary amine. For example, to the oxyalkylene base polymer (A), one of the carboxyl group-containing compound and the primary amine is added and then the other is added. To the carboxyl group-containing compound, one of the oxyalkylene base polymer (A) and the primary amine is added and then the other is added. Alternatively, to the oxyalkylene polymer (A), the carboxyl group-containing compound and the primary amine are simultaneously added.

A ratio of the carboxyl group-containing compound to the primary amine is not critical. Preferably, a molar ratio of the carboxyl group-containing compound to the primary amine is from 0.01:1 to 50:1, more preferably from 0.1:1 to 20:1. By changing this molar ratio, the curing rate of the composition can be adjusted.

If necessary, the curable resin composition of the present invention may contain a conventional additive such as a silanol condensation catalyst (curing catalyst), a physical property-adjusting agent for improving, for example, tensile properties, a reinforcing or non-reinforcing filler, a plasticizer, an adhesion accelerator, an anti-sagging agent, a colorant, an anti-aging agent and a flame retardant.

Examples of the silanol condensation catalyst are a low molecular weight polyamide resin prepared from an excess amount of polyamine and a polybasic acid or a reaction product of an excess amount of polyamine and an epoxy compound.

In addition, cther conventional silanol condensation catalysts such as an acid catalyst or a base catalyst may be used.

The catalysts may be used independently or as a mixture thereof.

Examples of the filler or the reinforcing material are ground and precipitated calcium carbonate; calcium carbonate which is surface treated with an aliphatic acid, a resin acid, a cationic surfactant or an anionic surfactant; magnesium carbonate, talc, titanium oxide, barium sulfate, alumina, metal powder of aluminum, zinc, iron; bentonite; kaolin clay; fumed silica; quartz powder; white carbon; carbon black; asbestos; glass fiber.

These fillers or the reinforcing materials may be used independently or as a mixture thereof.

When the filler or the reinforcing material which imparts transparency to the composition such as silica is used, a sealing compound having good transparency can be prepared.

Examples of the plasticizer which is used for adjusting physical properties or other properties of the composition are phthalates (e.g. dibutyl phthalate, diheptyl phthalate, di(2-ethylhexyl) phthalate, butylbenzyl phthalate, butylphthalylbutyl glycolate), non-aromatic dibasic acid esters (e.g. dioctyl adipate, dioctyl sebacate), esters of polyalkyleneglycol (e.g. diethyleneglycol dibenzoate, triethyleneglycol dibenzoate), phosphates (e.g. tricresyl phosphate, tributyl phosphate), chloroparaffins, and hydrocarbon oils (e.g. alkyldiphenyl, partially hydrogenated terphenyl). They may be used independently or as a mixture thereof.

The plasticizer may be added to a polymerization system of the oxyalkylene base polymer (A).

Examples of the anti-aging agent are amine, phenyl, imidazole, amine-aldehyde, amine-ketone, sulfur and phosphorus antioxidants; antiozonants; UV-light absorbers.

Amines such as γ-aminopropyltrimethoxysilane and N-(β-aminoethyl)aminopropylmethyldimethoxysilane acts also as an adhesive.

The curable resin composition of the present invention is used as an industrial elastomeric material, a sealant, an adhesive material, a potting material, a wrapping material, a waterproof material, a templating material, a binder or a modifier. In particular, the curable resin composition of the present invention is useful as a sealant and an adhesive.

### PREFERRED EMBODIMENTS OF THE INVENTION

The present invention will be illustrated by the following Examples, in which "parts" are by weight.

### Example 1

To a propylene oxide polymer having two methyldimethoxysillyl groups [-Si(CH₃)(OCH₃)₂] on the average and a number average molecular weight of 9600 (100 parts), laurylamine (1 part) and 2-ethylhexanoic acid (2 parts) were added. Further, as additives, glue calcium carbonate (CCR (trade name) manufactured by Shiraishi Industries, Co., Ltd.) (150 parts), dioctyl phthalate (65 parts), a hindered phenol anti-aging agent (Noklak NS-6 (trade name) manufactured by Ohuchi Shinko Chemical Co., Ltd.) (1 part) were added, and the mixture was well kneaded and passed through a small three-roll paint roll mill three time to form a sheet having a thickness of about 3 mm.

The sheet was then aged at 23°C, 50 %RH and a time for curing the sheet was measured. Whether or not the sheet was cured was determined by finger touch according to a method for measuring a tack-free time (a time necessary for curing) described by JIS A 5758.

The results are shown in Table 1.

### Comparative Examples 1-3

In the same manner as in Example 1 but using no 2-ethylhexanoic acid but 3 parts of laurylamine only, a sheet was prepared and its curing time was measured (Comparative Example 1).

In the same manner as in Example 1 but using no lauryl amine but 3 parts of 2-ethylhexanoic acid only, a sheet was prepared and its curing time was measured (Comparative Example 2).

In the same manner as in Example 1 but using 3 parts of dibutyltin dilaurate (DTL) in place of 2-ethylhexanoic acid, a sheet was prepared and its curing time was measured (Comparative Example 3).

The results of Comparative Examples 1-3 were also shown in Table 1.

**Table 1**

| Example No. | 1 | C. 1 | C. 2 | C. 3 |
|---|---|---|---|---|
| Laurylamine (parts) | 1 | 3 | 0 | 1 |
| 2-Ethylhexanoic acid (parts) | 2 | 0 | 3 | 0 |
| Dibutyltin dilaurate (parts) | 0 | 0 | 0 | 3 |
| Tack-free time (hours) | 3 hr. 30 min. | Not cured after 24 hrs. | | 5 hrs. |

As understood from the results in Table 1, when 2-ethylhexanoic acid and laurylamine were used in combination, the time for curing the composition was much shortened in comparison with the composition containing either one of them and the same as the composition containing dibutyltin dilaurate (DTL).

### Examples 2-6

In the same manner as in Example 1 but using 2 parts of 2-ethylhexanoic acid in combination with lauryl amine in a molar ratio of Table 2, a sheet was prepared and its tack-free time was measured (23°C, 50 %RH). The results are shown in Table 2 together with the result in Example 1.

**Table 2**

| Example No. | Molar ratio of 2-ethylhexanoic acid to laurylamine | Tack-free time (hrs.) |
|---|---|---|
| 1 | 2.6 | 3.5 |
| 2 | 0.5 | 4.0 |
| 3 | 1.0 | 3.0 |
| 4 | 1.5 | 2.8 |
| 5 | 2.5 | 3.5 |
| 6 | 20.0 | 1.0 |

As seen from the results of Table 2, the use of 2-ethylhexanoic acid and laurylamine in combination increased the curing rate. In particular when the molar ratio was between 0.5 and 20, the curable compositions had very high curing rates.

## Claims

1. A curable resin composition free from any organometallic component comprising:
(A) an oxyalkylene base polymer having at least one silicon atom-containing group whose silicon atom is attached to a hydroxyl group or a hydrolyzable group and being cross-linkable through formation of a siloxane bond;
(B) a compound having at least one carboxyl group; and
(C) a compound having at least one primary amine group.

2. A curable resin composition according to Claim 1, wherein said silicon-containing group is a group of the formula: 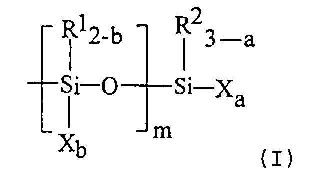 wherein R¹ and R² are the same or different and each is an alkyl group having 1 to 20 carbon atoms, an aryl group having 6 to 20 carbon atoms, an aralkyl group having 7 to 20 carbon atoms or a triorganosiloxy group of the formula:
(R')₃SiO- (II)
wherein R' is a monovalent hydrocarbon group having 1 to 20 carbon atoms provided that three R' groups may be the same or different; X is a hydroxyl group or a hydrolyzable group provided that when two or more X groups are present, they may be the same or different; a is 0, 1, 2 or 3; b is 0, 1 or 2 provided that b in different groups in the brackets may be the same or different; m is an integer of 0 to 19 provided that a sum of a and all b's is at least one.

3. A curable resin composition according to Claim 2, wherein said silicon-containing group is a group of the formula: 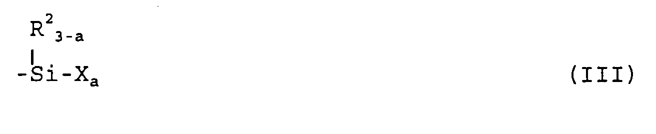 wherein R², X and a are the same as defined above.

4. A curable resin composition according to Claim 2, wherein said silicon-containing group is a group of the formula -Si(CH₃)(OCH₃)₂.

5. A curable resin composition according to Claim 1, wherein said oxyalkylene base polymer is an oxypropylene polymer.

6. A curable resin composition according to Claim 1, wherein said compound having at least one carboxyl group is an aliphatic monocarboxylic acid.

7. A curable resin composition according to Claim 1, wherein said compound having at least one primary amine group is an aliphatic monoamine.

8. A curable resin composition according to Claim 7, wherein said aliphatic monoamine has at least 8 carbon atoms.

## Patentansprüche

1. Härtbare Harzzusammensetzung, die frei von jeglicher organometallischer Komponente ist, enthaltend:
(A) ein Polymer auf Oxyalkylenbasis mit mindestens einer Siliziumatom-haltigen Gruppe, deren Siliziumatom an eine Hydroxylgruppe oder eine hydrolysierbare Gruppe gebunden ist und über die Bildung einer Siloxanbindung vernetzbar ist;
(B) eine Verbindung mit mindestens einer Carboxylgruppe; und
(C) eine Verbindung mit mindestens einer primären Aminogruppe.

2. Härtbare Harzzusammensetzung nach Anspruch 1, worin die Silizium-haltige Gruppe eine Gruppe mit der Formel 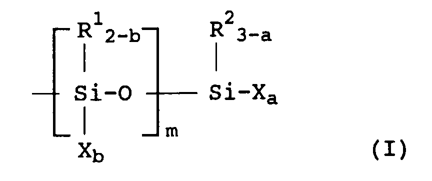 ist, worin R¹ und R² gleich oder verschieden sind, und jedes ist eine Alkylgruppe mit 1 bis 20 Kohlenstoffatomen, eine Arylgruppe mit 6 bis 20 Kohlenstoffatomen, eine Aralkylgruppe mit 7 bis 20 Kohlenstoffatomen oder eine Triorganosiloxygruppe mit der Formel:
(R')₃SiO- (II)
worin R' eine monovalente Kohlenwasserstoffgruppe mit 1 bis 20 Kohlenstoffatomen ist, mit der Maßgabe, daß die drei R'-Gruppen gleich oder verschieden sind; X ist eine Hydroxylgruppe oder eine hydrolysierbare Gruppe, mit der Maßgabe, daß wenn zwei oder mehr X-Gruppen vorliegen, sie gleich oder verschieden sein können; a ist 0, 1, 2 oder 3; b ist 0, 1 oder 2, mit der Maßgabe, daß b in verschiedenen Gruppen in den Klammern gleich oder verschieden sein kann; m ist eine ganze Zahl von 0 bis 19 mit der Maßgabe, daß die Summe von a und aller b's mindestens eins ist.

3. Härtbare Harzzusammensetzung nach Anspruch 2, worin die Silizium-haltige Gruppe eine Gruppe mit der Formel: 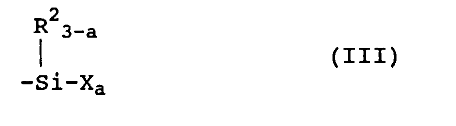 ist, worin R², X und a wie oben definiert sind.

4. Härtbare Harzzusammensetzung nach Anspruch 2, worin die Silizium-haltige Gruppe eine Gruppe mit der Formel -Si(CH₃)(OCH₃)₂ ist.

5. Härtbare Harzzusammensetzung nach Anspruch 1, worin das Polymer auf Oxyalkylenbasis ein Oxypropylenpolymer ist.

6. Härtbare Harzzusammensetzung nach Anspruch 1, worin die Verbindung mit mindestens einer Carboxylgruppe eine aliphatische Monocarbonsäure ist.

7. Härtbare Harzzusammensetzung nach Anspruch 1, worin die Verbindung mit mindestens einer primären Aminogruppe ein aliphatisches Monoamin ist.

8. Härtbare Harzzusammensetzung nach Anspruch 7, worin das aliphatische Monoamin mindestens 8 Kohlenstoffatome hat.

## Revendications

1. Composition de résine durcissable exempte de tout composant organométallique, comprenant:
(A) un polymère d'oxyalkylène de base présentant au moins un groupe contenant un atome de silicium dont l'atome de silicium est attaché à un groupe hydroxyle ou à un groupe hydrolysable, et réticulable par formation d'une liaison siloxane;
(B) un composé présentant au moins un groupe carboxyle; et
(C) un composé présentant au moins un groupe amine primaire.

2. Composition de résine durcissable selon la revendication 1, dans laquelle ledit groupe contenant du silicium est un groupe de la formule: 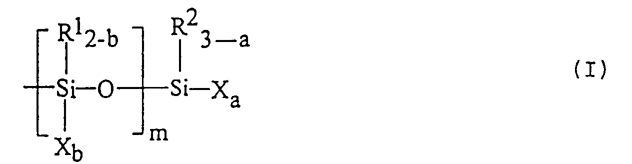 dans laquelle R¹ et R² sont identiques ou différents, et chacun représente un groupe alkyle présentant de 1 à 20 atomes de carbone, un groupe aryle présentant de 6 à 20 atomes de carbone, un groupe aralkyle présentant de 7 à 20 atomes de carbone ou un groupe triorganosiloxy de la formule:
(R')₃SiO- (II)
dans laquelle R' est un groupe hydrocarboné monovalent présentant de 1 à 20 atomes de carbone, avec la condition que trois groupes R' peuvent être identiques ou différents; X est un groupe hydroxyle ou un groupe hydrolysable, avec la condition que, lorsque deux ou plusieurs groupes X sont présents, ils peuvent être identiques ou différents; a représente 0, 1, 2 ou 3; b représente 0, 1 ou 2 avec la condition que, dans différents groupes présents entre les crochets, les b peuvent être identiques ou différents; m est un entier de 0 à 19, avec la condition qu'une somme de a et de tous les b vaut au moins 1.

3. Composition de résine durcissable selon la revendication 2, dans laquelle ledit groupe contenant du silicium est un groupe de la formule: 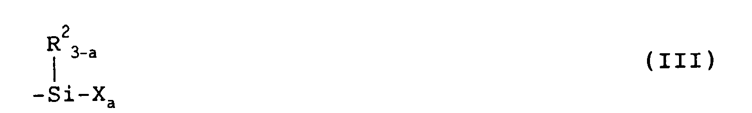 dans laquelle R², X et a sont les mêmes que ceux définis plus haut.

4. Composition de résine durcissable selon la revendication 2, dans laquelle ledit groupe contenant du silicium est un groupe de formule -Si(CH₃)(OCH₃)₂.

5. Composition de résine durcissable selon la revendication 1, dans laquelle ledit polymère d'oxyalkylène de base est un polymère d'oxypropylène.

6. Composition de résine durcissable selon la revendication 1, dans laquelle ledit composé présentant au moins un groupe carboxyle est un acide monocarboxylique aliphatique.

7. Composition de résine durcissable selon la revendication 1, dans laquelle ledit composant présentant au moins un groupe amine primaire est une monoamine aliphatique.

8. Composition de résine durcissable selon la revendication 7, dans laquelle ladite monoamine aliphatique compte au moins 8 atomes de carbone.
